# EUROPÄISCHE PATENTSCHRIFT

(11) **EP 1 994 268 B1**
(45) Veröffentlichungstag und Bekanntmachung des Hinweises auf die Patenterteilung: **12.10.2016**
(21) Anmeldenummer: 07723220.5
(22) Anmeldetag: 13.03.2007
(51) Int. Cl.: F02C 6/12, F01D 25/08, F01D 17/16, F16F 1/32

(54) **TURBOLADER**
TURBOCHARGER
TURBOCOMPRESSEUR

(30) Priorität: 14.03.2006 DE 102006011709
(43) Veröffentlichungstag der Anmeldung: 26.11.2008
(73) Patentinhaber: BorgWarner, Inc., Auburn Hills, MI 48326-2872 (US)
(72) Erfinder: FRANKENSTEIN, Dirk, 67550 Worms (DE); FÄTH, Holger, 67136 Fussgönheim (DE); BÖNING, Ralf, 67829 Reiffelbach (DE)
(74) Vertreter: Hoefer & Partner Patentanwälte mbB
(86) Internationale Anmeldenummer: PCT/EP2007/002210
(87) Internationale Veröffentlichungsnummer: WO 2007/104535

(56) Entgegenhaltungen:
- EP-A- 0 187 486
- DE-A1- 3 023 009
- DE-A1- 3 023 010
- DE-U1-202005 009 491

## Beschreibung

Die Erfindung betrifft einen Turbolader gemäß dem Oberbegriff des Anspruches 1. Ein derartiger Turbolader ist aus der WO 2004/048 755A bzw. der DE 20 2005 009 491 U1 bekannt.

Ein weiterer Turbolader ist aus der EP 1 398 463 A1 bekannt. Bei diesem Turbolader ist um dessen Welle herum auf der Turbinenseite ein Hitzeschild vorgesehen, der dazu dient, das Lagergehäuse vor Beschädigungen durch überhöhte Temperaturen aufgrund der durch die Turbine strömenden Abgase des Verbrennungsmotors zu schützen. Der bekannte Hitzeschild besteht aus einem einlagigen Bauteil, dessen Wärmedämmeigenschaften jedoch verbesserungsbedürftig sind.

In der EP 0 160 460 B1 ist eine weitere Anordnung dargestellt, wobei hier eine Scheibenfeder zum Einsatz kommt, die eine axiale Vorspannkraft auf den axial zu fixierenden Schaufellagerring ausübt. Die Funktion der Wärmedämmung ist aufgrund der Turbinenradferne an dieser Stelle nicht gefordert.

Es ist daher Aufgabe der vorliegenden Erfindung, einen Turbolader der im Oberbegriff des Anspruches 1 angegebenen Art zu schaffen, der zum einen mittels Scheibenfeder eine axiale Fixierung der Kartusche der variablen Turbinengeometrie in Turbinenradnähe gewährleistet und zum anderen eine verbesserte Wärmedämmung in Richtung des Lagergehäuses ermöglicht.

Die Lösung dieser Aufgabe erfolgt durch die Merkmale des Anspruchs 1.

Erfindungsgemäß ist die Scheibenfeder im Verbund mit einem Isolator ausgeführt. Dieser Isolator bewirkt zum einen eine geringere Bauteiltemperatur der Tellerfeder und somit eine höhere Anpresskraft, zum anderen einen geringeren Wärmeeintrag in die benachbarten Bauteile (Lagergehäuse). Der Verbund aus Wärmeschutzlage, Isolator und Scheibenfederlage kann entweder stoff- oder formschlüssig erfolgen, oder es können die Einzelteile bei der Turbolader-Montage einzeln montiert werden. Der Isolator kann so gestaltet werden, dass er die heißen Kartuschenteile gegenüber dem Lagergehäuse abschirmt.

Die Scheibenfeder des erfindungsgemäßen Turboladers ist aus zumindest zwei, gegebenenfalls jedoch mehreren Materiallagen ausgebildet und beinhaltet sowohl die Funktion der Vorspannkrafterzeugung als auch die weitere Verbesserung der Abschirmfunktion durch Erhöhung des Wärmewiderstandes. Dadurch ist es möglich, die Funktion, insbesondere auch bei erhöhten Abgastemperaturen, sicherzustellen.

Zusätzlich kann u. U. vorteilhafterweise auf eine Flüssigkeitskühlung des Lagergehäuses verzichtet werden.

Die Unteransprüche haben vorteilhafte Weiterbildungen der Erfindung zum Inhalt.

Weitere Einzetheiten, Vorteile und Merkmale der vorliegenden Erfindung ergeben sich aus nachfolgender Beschreibung anhand der Zeichnung. Darin zeigt:
- Fig. 1: einen Teil eines erfindungsgemäßen Turboladers mit einer erfindungsgemäßen Scheibenfeder,
- Fig. 2: eine Schnittdarstellung einer Ausführungsform der erfindungsgemäßen Scheibenfeder.

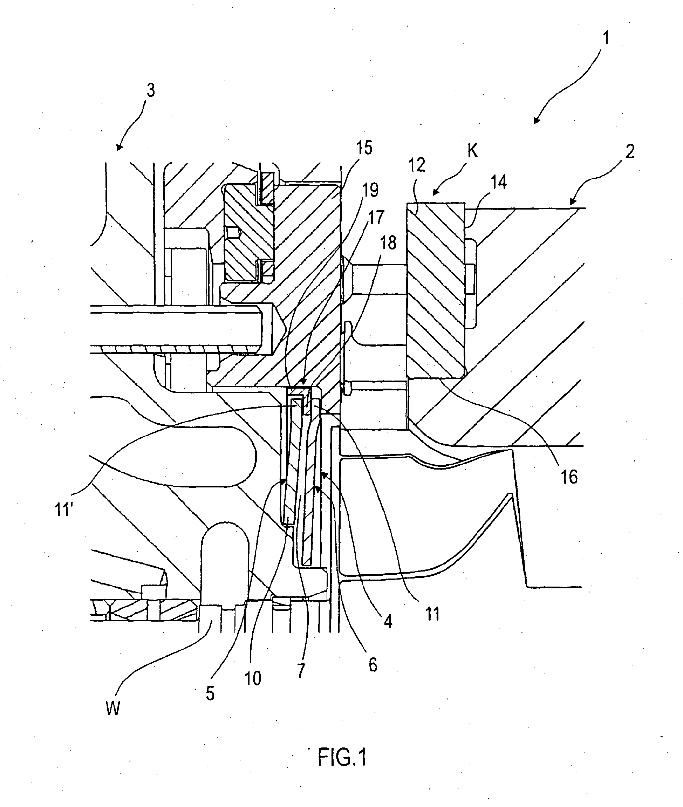

In Fig. 1 ist ein Teilbereich eines erfindungsgemäßen Turboladers 1 dargestellt, da diese Darstellung für die Erläuterung der erfindungsgemäßen Prinzipien ausreichend ist. Natürlich weist der Turbolader 1 sämtliche üblicherweise vorgesehenen Konstruktionselemente auf, die, wie gesagt, in Fig. 1 jedoch zur Vereinfachung der Darstellung weggelassen sind.

Somit ist in Fig. 1 ein Turbinengehäuse 2 einer Turbine dargestellt, das benachbart zu einem Lagergehäuse 3 angeordnet ist. Dieses Lagergehäuse 3 ist zwischen dem Turbinengehäuse 2 und einem Verdichtergehäuse (nicht dargestellt) eines ebenfalls nicht gezeichneten Verdichterrades angeordnet. Das Lagergehäuse 3 weist die Lagerung für eine Welle auf, die in Fig. 1 durch das Bezugszeichen W symbolisiert ist, da Fig. 1 nur den oberen Teilbereich des erfindungsgemäßen Turboladers 1 wiedergibt.

Die Welle W trägt die Turbine und das Verdichterrad und ist über eine geeignete Lageranordnung im Lagergehäuse 3 gelagert.

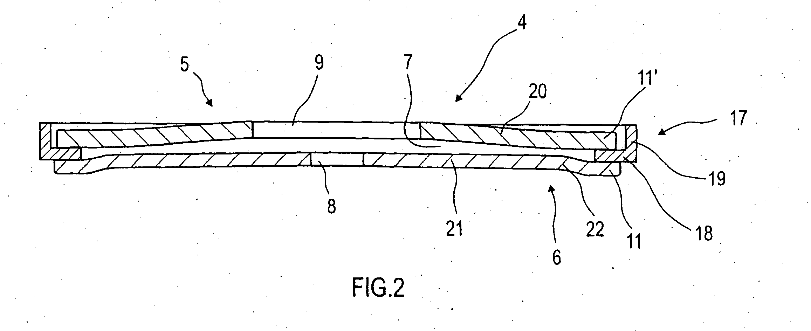

Zwischen dem Lagergehäuse 3 und einer Kartusche K, die von einer VTG Scheibe 12 mit axialem Anschlag 14 und einem Schaufellagerring 15 gebildet wird und die in dem Turbinengehäuse 2 axial verschieblich angeordnet ist, ist eine erfindungsgemäße Scheibenfeder 4 eingespannt, die mehrlagig ausgebildet ist. Im Beispielsfalle sind hier zwei Materiallagen 5 und 6 vorgesehen, die nachfolgend anhand der Fig. 2 näher erläutert werden.

Fig. 1 verdeutlicht die Anordnung der Scheibenfeder 4 zwischen dem Turbinengehäuse 2 und dem Lagergehäuse 3, wobei die Materiallage 5 einen radial inneren Anlagebereich 10 und einen radial äußeren Anlagebereich 11' aufweist, der parallel zu einem Anlagebereich 11 der Materiallage 6 ausgerichtet ist. Ein Isolator 17 ist mit einem Klemmbereich 18 zwischen die Materiallagen 5 und 6 bzw. deren Anlagebereiche 11 und 11' eingeklemmt. Der radial äußere Rand des Isolators 17 ist um ca. 90° abgewinkelt und bildet dadurch einen Abstützbereich 19, der den Isolator 17 radial an der Kartusche K abstützt. Dadurch wird die von der Kartusche K ausgehende Wärme gegenüber dem Lagergehäuse 3 wirksam isoliert.

In Fig. 2 ist die erfindungsgemäße Scheibenfeder 4 in ihrer Gesamtheit dargestellt. Die beiden Materiallagen 5 und 6 sind bei dieser Ausführungsform separate Teile, die sandwichartig unter Einschluss des Klemmbereichs 18 des Isolators 17 aufeinander liegen. Fig. 2 verdeutlicht, dass die Materiallage 5 eine Mittelausnehmung 9 aufweist, die koaxial zu einer Mittelausnehmung 8 der Materiallage 6 angeordnet ist und einen größeren Durchmesser hat. Zwischen den Materiallagen 5 und 6 ist ein Luftspalt 7 vorgesehen, der die Wärmedämmeigenschaften weiter verbessert. Ferner zeigt Fig. 2, dass die Materiallage 5 einen Hauptteil 20 benachbart zur Mittelausnehmung 9 aufweist, der in einem stumpfen Winkel zum Anlagebereich 11' angeordnet ist. Auch die Materiallage 6 weist einen Hauptteil 21 benachbart zur Mittelausnehmung 8 auf, der über einen abgewinkelten Zwischenbereich 22 mit dem Auflagebereich einstückig verbunden ist.

Zusätzlich zur schriftlichen Beschreibung und zur Ergänzung der Offenbarung wird explizit auf die zeichnerische Darstellung der Erfindung in den Figuren 1 und 2 Bezug genommen.

### Bezugszeichenliste

- 1: Turbolader/Abgasturbolader
- 2: Turbinengehäuse
- 3: Lagergehäuse
- 4: Scheibenfeder
- 5, 6: Materiallagen
(5: Scheibenfederlage (Tellerfeder) für Vorspannung;
6: Wärmeschutzlage (Hitzeschild) für Lage 5
- 7: Luftspalt
- 8, 9: Mittelausnehmungen
- 10, 11, 11': Anlagebereiche
- 12: VTG Scheibe
- 13: -
- 14: Axialer Anschlag
- 15: Schaufellagerring
- 16: Zentrierung der Kartusche K am Turbinengehäuse 2
- 17: Isolator
- 18: Klemmbereich
- 19: Abstützbereich
- 20: Hauptteil von 5 abgewinkelt zu 11'
- 21: Hauptteil von 6 über abgewinkelten Zwischenbereich 22 mit 11 verbunden
- 22: Zwischenbereich
- W: Welle
- K: Kartusche der variablen Turbinengeometrie (VTG)

## Patentansprüche

1. Turbolader (1)
- mit einem Turbinengehäuse (2) eines Turbinenrades;
- mit einer im Turbinengehäuse (2) angeordneten Kartusche (K) für die variable Turbinengeometrie;
- mit einem Lagergehäuse (3), das zwischen dem Turbinengehäuse (2) und einem Verdichtergehäuse eines Verdichterrades angeordnet und in dem eine Lageranordnung für eine Welle (W) angeordnet ist, die das Turbinenrad und das Verdichterrad trägt; und
- mit einer Scheibenfeder (4), die zwischen der Kartusche (K) und dem Lagergehäuse (3) angeordnet ist und die aus zumindest zwei Materiallagen (5, 6) aufgebaut ist, von denen eine erste Materiallage (6) als Wärmeschutzlage für die andere eine Scheibenfederlage bildende zweite Materiallage (5) dient,
**dadurch gekennzeichnet,**
- **dass** zwischen den Materiallagen (5, 6) ein Isolator (17) aus wärmedämmendem Material angeordnet ist, und
- **dass** der Isolator (17) einen Klemmbereich (18) aufweist, der zwischen radial außen angeordneten Anlagebereichen (11, 11') der ersten Materiallage (6) bzw. der zweiten Materiallage (5) angeordnet ist.

2. Turbolader nach Anspruch 1, **dadurch gekennzeichnet, dass** der Isolator (17) topfähnlich ausgebildet ist.

3. Turbolader nach Anspruch 1, **dadurch gekennzeichnet, dass** die Anlagebereiche (11, 11') parallel zueinander angeordnet sind.

4. Turbolader nach einem der Ansprüche 1 oder 3, **dadurch gekennzeichnet, dass** der Isolator (17) ferner einen Abstützbereich (19) aufweist, der in einem Winkel von etwa 90° zum Klemmbereich (18) angeordnet ist.

5. Turbolader nach einem der Ansprüche 1 bis 4, **dadurch gekennzeichnet, dass** zwischen den Materiallagen (5, 6) ein Luftspalt (7) angeordnet ist

6. Turbolader nach einem der Ansprüche 1 bis 5, **dadurch gekennzeichnet, dass** die zweite Materiallage (5) die Kartusche (K) axial am Turbinengehäuse (2) fixiert.

7. Turbolader nach einem der Ansprüche 1 bis 5, **dadurch gekennzeichnet, dass** die Materiallagen (5, 6) und der Isolator (17) einstückig miteinander verbunden sind.

8. Turbolader nach einem der Ansprüche 1 bis 5, **dadurch gekennzeichnet, dass** die Materiallagen (5, 6) und der Isolator (17) separate Bauteile sind.

9. Turbolader nach einem der Ansprüche 1 bis 5, **dadurch gekennzeichnet, dass** die Materiallagen (5, 6) und der Isolator (17) aus demselben oder aus unterschiedlichem Material bestehen.

## Claims

1. Turbocharger (1)
- with a turbine casing (2) of a turbine wheel;
- with a cartridge (K) for the variable turbine geometry, which is arranged in the turbine casing (2) ;
- with a bearing housing (3), which is arranged between the turbine casing (2) and a compressor casing of a compressor wheel, and in which is arranged a bearing arrangement for a shaft (W) which supports the turbine wheel and the compressor wheel; and
- with a disk spring (4), which is arranged between the cartridge (K) and the bearing housing (3) and which is constructed from at least two material layers (5, 6), of which a first material layer (6) serves as a thermal protection layer for the other, second material layer (5) which forms a disk spring layer,
**characterized in that**
- an insulator (17) consisting of thermal insulating material is arranged between the material layers (5, 6), and
- the insulator (17) has a clamping region (18) which is arranged between locating regions (11, 11'), which are arranged radially on the outside, of the first material layer (6) or of the second material layer (5).

2. Turbocharger according to Claim 1, **characterized in that** the insulator (17) is formed with a cup-like shape.

3. Turbocharger according to Claim 1, **characterized in that** the locating regions (11, 11') are arranged parallel to each other.

4. Turbocharger according to one of Claims 1 or 3, **characterized in that** the insulator (17) additionally has a support region (19) which is arranged at an angle of about 90° to the clamping region (18).

5. Turbocharger according to one of Claims 1 to 4, **characterized in that** an air gap (7) is arranged between the material layers (5, 6).

6. Turbocharger according to one of Claims 1 to 5, **characterized in that** the second material layer (5) axially fixes the cartridge (K) on the turbine casing (2).

7. Turbocharger according to one of Claims 1 to 5, **characterized in that** the material layers (5, 6) and the insulator (17) are interconnected in one piece.

8. Turbocharger according to one of Claims 1 to 5, **characterized in that** the material layers (5, 6) and the insulator (17) are separate components.

9. Turbocharger according to one of Claims 1 to 5, **characterized in that** the material layers (5, 6) and the insulator (17) consist of the same or of different material.

## Revendications

1. Turbocompresseur (1), comprenant
- un carter de turbine (2) d'une roue de turbine ;
- une cartouche (K) disposée dans le carter de turbine (2) pour la géométrie de turbine variable ;
- un logement de palier (3) qui est disposé entre le carter de turbine (2) et un boîtier de compresseur d'une roue de compresseur et dans lequel est disposé un agencement de palier pour un arbre (W) qui porte la roue de turbine et la roue de compresseur ; et
- un ressort en forme de disque (4), qui est disposé entre la cartouche (K) et le logement de palier (3) et qui est constitué d'au moins deux couches de matériau (5, 6), dont une première couche de matériau (6) sert de couche de protection thermique pour l'autre, deuxième couche de matériau (5), formant une couche de ressort en forme de disque,
**caractérisé en ce que**
- un isolant (17) en matériau calorifuge est disposé entre les couches de matériau (5, 6), et
- l'isolant (17) présente une région de serrage (18) qui est disposée entre des régions d'appui disposées radialement à l'extérieur (11, 11') de la première couche de matériau (6), respectivement de la deuxième couche de matériau (5).

2. Turbocompresseur selon la revendication 1, **caractérisé en ce que** l'isolant (17) est réalisé en forme de pot.

3. Turbocompresseur selon la revendication 1, **caractérisé en ce que** les régions d'appui (11, 11') sont disposées parallèlement l'une à l'autre.

4. Turbocompresseur selon l'une quelconque des revendications 1 ou 3, **caractérisé en ce que** l'isolant (17) présente en outre une région de support (19) qui est disposée à un angle d'environ 90° par rapport à la région de serrage (18).

5. Turbocompresseur selon l'une quelconque des revendications 1 à 4, **caractérisé en ce qu'**entre les couches de matériau (5, 6) est disposé un entrefer (7).

6. Turbocompresseur selon l'une quelconque des revendications 1 à 5, **caractérisé en ce que** la deuxième couche de matériau (5) fixe la cartouche (K) axialement sur le carter de turbine (2).

7. Turbocompresseur selon l'une quelconque des revendications 1 à 5, **caractérisé en ce que** les couches de matériau (5, 6) et l'isolant (17) sont connectés ensemble d'une seule pièce.

8. Turbocompresseur selon l'une quelconque des revendications 1 à 5, **caractérisé en ce que** les couches de matériau (5, 6) et l'isolant (17) sont des composants séparés.

9. Turbocompresseur selon l'une quelconque des revendications 1 à 5, **caractérisé en ce que** les couches de matériau (5, 6) et l'isolant (17) se composent du même matériau ou d'un matériau différent.
